Europäisches Patentamt

(19) European Patent Office

Office européen des brevets

(11) Numéro de publication : **0 156 678**
**B1**

(12) **FASCICULE DE BREVET EUROPÉEN**

(45) Date de publication du fascicule du brevet :
21.10.87

(21) Numéro de dépôt : **85400314.2**

(22) Date de dépôt : **21.02.85**

(51) Int. Cl.⁴ : **A 01 J 25/13**

(54) Dispositif de moulage pour la fabrication des fromages du type pâte pressée demi-ferme à partir dun préfromage liquide.

(30) Priorité : **02.03.84 FR 8403314**

(43) Date de publication de la demande :
**02.10.85 Bulletin 85/40**

(45) Mention de la délivrance du brevet :
**21.10.87 Bulletin 87/43**

(84) Etats contractants désignés :
**AT BE CH DE FR GB IT LI LU NL SE**

(56) Documents cités :
**DE-B- 1 189 701**
**FR-A- 1 297 901**
**FR-A- 2 052 121**
**FR-A- 2 071 201**
**FR-A- 2 206 055**
**FR-A- 2 389 331**
**FR-A- 2 528 663**

(73) Titulaire : **Union de Coopératives Agricoles dite:**
**UNION LAITIERE NORMANDE U.L.N.**
**F-50890 Conde-sur-Vire (FR)**

(72) Inventeur : **Grandin, Claude**
**La Méranière**
**F-50810 Precorbin (FR)**
Inventeur : **Champagneux, Daniel**
**47, Impasse des Cormorans**
**F-50000 Saint Lo (FR)**
Inventeur : **Denier d'Aprigny, Philippe**
**104, rue de Touraine**
**F-50000 Saint Lo (FR)**

(74) Mandataire : **Doan, Dinh-Nam et al**
**Cabinet BEAU DE LOMENIE 55, rue d'Amsterdam**
**F-75008 Paris (FR)**

Jouve, 18, rue St-Denis, 75001 Paris, France

## Description

La présente invention concerne un dispositif de moulage pour la fabrication des fromages de type pâte pressée demi-ferme à partir d'un préfromage liquide.

Il est connu par le brevet français 2 052 121 et ses certificats d'addition de fabriquer des fromages par coagulation d'un préfromage liquide c'est-à-dire d'un concentré de lait obtenu par ultrafiltration répétée ou continue du lait ordinaire à travers une membrane semi-perméable dont la dimension moyenne des pores est inférieure ou égale à 30 mμ, sous une pression de 4 à 50 kg/cm². Le rétentat d'ultrafiltration est un liquide laitier contenant la totalité de la caséine du lait initial, la majeure partie des protéines solubles et une fraction des constituants dits solubles de ce lait initial (tels que lactose, sels minéraux), à des concentrations sensiblement égales à celles contenues dans un fromage égoutté, préparé par coagulation du lait ordinaire. Le degré de concentration des préfromages liquides réglé, soit par le temps, soit par l'asservissement des débits et pressions de passage du lait ordinaire à travers la membrane semi-perméable doit correspondre au degré de concentration des matières azotées que l'on trouve dans le genre de fromage que l'on désire fabriquer.

Pour les fromages de type pâte pressée demi-ferme, les caractéristiques pondérales à obtenir dans le rétentat ou pré-fromage liquide sont par exemple les suivantes :

| | |
|---|---|
| matière sèche totale : | 40 à 48 % |
| matière azotée : | 18 à 23 % |
| lactose résiduel : | 1 à 2 % |

Pour atteindre ces valeurs, le lait ou le produit laitier initial est :

concentré volumétriquement, par ultrafiltration, de 6 à 8 fois environ,

additionné d'eau, soit avant toute mise en œuvre de l'appareillage d'ultrafiltration, soit après mise en route de celui-ci, par injection dans le produit liquide ne passant pas au travers de la membrane (diafiltration).

Ce préfromage liquide peut être additionné de substances appropriées, telles que levain lactique, avant d'être coagulé par la présure ou toute autre substance coagulante.

Jusqu'à présent, aucun dispositif de moulage approprié n'a été suggéré dans la littérature pour la fabrication des fromages à partir de cette matière première nouvelle qu'est le préfromage liquide décrit ci-dessus. Contrairement aux dispositifs de moulage classiques qui doivent réaliser le moulage d'un caillé solide contenant encore du lactosérum tout en laissant s'éliminer ce lactosérum par égouttage, les dispositifs de moulage pour le préfromage liquide doivent maintenir intégralement ledit préfromage liquide dans les moules jusqu'à sa coagulation complète et son démoulage et éviter toute fuite de liquide vers l'extérieur des moules.

Ces dispositifs de moulage doivent donc être parfaitement étanches. Ils doivent également permettre le démoulage des fromages obtenus sans endommager leur présentation extérieure, et le nettoyage et l'aseptisation des moules sans trop de difficultés.

On a déjà proposé de mettre en œuvre des moules en acier inoxydable munis chacun au niveau du fond d'un clapet actionné par un ressort. Après l'obtention du coagulum, le démoulage est assuré par :

une opération préalable d'électrolyse appliquée à la surface du coagulum,

le retournement des moules,

la poussée par de l'air comprimé, via le clapet pour la récupération du coagulum dans des contre-moules.

Toutefois, les opérations de moulage et de démoulage avec un tel dispositif sont fort complexes et de plus, le dispositif de moulage en question est spécifique du format des fromages, et pour chaque format de fromage il faut envisager une unité particulière.

La présente invention permet de remédier aux inconvénients mentionnés ci-dessus, et de réaliser un dispositif de moulage à partir de matériaux utilisés couramment en fromagerie, ledit dispositif étant parfaitement étanche lors de l'opération de moulage et pouvant se désassembler en plusieurs parties pour faciliter le démoulage et le nettoyage.

Le brevet français FR-A-2 206 055 (demande n° 72.40242) décrit un dispositif de moulage de fromages à pâte molle à partir du préfromage liquide ; un tel dispositif comporte :

un bloc de moules sans fond,

un tapis en matériau élastomère,

un plateau rigide,

et un dispositif de serrage pour maintenir le bloc de moules appliqué contre le tapis.

Un nombre important de pièces constitutives du dispositif de moulage est nécessaire pour assurer l'assemblage desdites pièces et l'étanchéité dudit dispositif.

Le brevet français FR-A-2 389 331 (demande n° 77.13297) décrit un autre dispositif de moulage de fromages à partir du préfromage liquide, comprenant également quatre pièces :

un bloc de prémoules à cavités paraboloïdales,

un bloc de moules sans fond,

un store,

et un plateau ;

le bloc de moules peut être centré sur le bloc de prémoules par un système à tétons et trous.

Le fromage liquide est d'abord coagulé dans le bloc de prémoules puis transféré par retournement dans le bloc de moules sans fond placé sur le store et le plateau. Le coagulum est moulé dans sa forme finale entre les parois des moules et le store.

Outre le fait que ce dispositif comporte un grand nombre de pièces constitutives, son utilisation fait intervenir au moins deux étapes de moulage :

une étape de coagulation du préfromage liquide et

une étape de moulage du coagulum.

La demande de brevet français FR-A-2 528 663 (demande n° 82.10751) décrit un dispositif de moulage du fromage frais comprenant deux matrices munies d'alvéoles complémentaires de moulage, et réunies selon un plan de joint vertical. L'assemblage de ces matrices est assuré par un système de centrage à tétons et trous, et l'étanchéité est assurée par un joint encastré en partie dans chaque matrice, sur la périphérie du plan de joint et par un dispositif de verrouillage.

Un tel dispositif de moulage comporte également un grand nombre de pièces constitutives.

La présente invention a donc pour objet un dispositif de moulage pour la fabrication des fromages à pâte pressée demi-ferme à partir d'un préfromage liquide, du type comprenant deux pièces assemblables de manière étanche et amovible l'une à l'autre, l'une au moins des pièces comportant des cavités de moulage. Le dispositif de moulage selon l'invention est réalisé en deux pièces superposables, assemblables l'une à l'autre suivant un plan de joint horizontal, la pièce supérieure comportant des cavités de moulage et la pièce inférieure formant le fond de ces cavités de moulage ou comportant des cavités de moulage complémentaires des précédentes ; ces deux pièces sont munies d'un système d'assemblage à nervures et à rainures d'emboîtement, et ces rainures ont une configuration ajustée à celle de ces nervures pour réaliser l'étanchéité lorsque lesdites pièces sont superposées l'une à l'autre.

Selon un premier mode de réalisation du dispositif de moulage selon l'invention, la pièce supérieure est constituée par un ensemble de moules solidarisés les uns aux autres, comportant chacun une cavité de moulage ouverte à ses deux extrémités, et la pièce inférieure est un plateau muni de rainures de configuration ajustée à celle de la base de l'ensemble de moules pour permettre l'emboîtement étanche et amovible de la base de cet ensemble dans lesdites rainures.

En particulier, la pièce supérieure est constituée par des moules solidaires, cylindriques, à section circulaire et la pièce inférieure est munie de rainures annulaires.

Selon un second mode de réalisation du dispositif de moulage, selon l'invention, la pièce inférieure est constituée par une plaque multi-moule comportant des demi-cavités de moulage ouvertes vers le haut et des rainures d'emboîtement entourant les bords supérieurs desdites demi-cavités de moulage, et la pièce supérieure est constituée par une plaque contre-moule comportant des demi-cavités de moulage ouvertes vers le haut et vers le bas, complémentaires des demi-cavités de moulage de la plaque multi-moule, et des nervures d'emboîtement entourant les bords inférieurs desdites demi-cavités de moulage ; la configuration des rainures est ajustée à celle des nervures pour permettre l'emboîtement de façon étanche et amovible de ces nervures dans ces rainures ; les sommets des demi-cavités de moulage de la plaque contre-moule sont prolongés vers le haut chacun par un alésage formant un entonnoir pour l'admission du fromage liquide dans les cavités de moulage.

En particulier, les demi-cavités de moulage sont généralement cylindriques, à axes alignés, tandis que les nervures et les rainures d'emboîtement sont annulaires.

De préférence, l'entonnoir a une forme cylindro-tronconique et la partie tronconique de l'entonnoir est percée de trous d'évent. Plus particulièrement, l'étanchéité du système d'assemblage par emboîtement est assurée par le poids de la plaque contre-moule. Par ailleurs, le dispositif de moulage selon l'invention comporte un plateau pour le retournement du dispositif de moulage et pour la réception du coagulum moulé.

On décrit l'invention dans ce qui suit en référence au dessin ci-joint sur lequel :

la figure 1   est une vue en perspective du dispositif de moulage selon l'invention montrant l'ensemble de moules et le plateau avant assemblage,

la figure 2   est une vue en coupe élévation du dispositif de la figure 1 selon un plan de symétrie des moules alignés,

les figures 3 et 4   représentent les vues du dispositif en cours de moulage et en cours de démoulage respectivement,

la figure 5   est une vue en coupe élévation d'un autre mode de réalisation du dispositif de moulage selon l'invention,

la figure 6   est une vue du dispositif de la figure 5 au cours du démoulage.

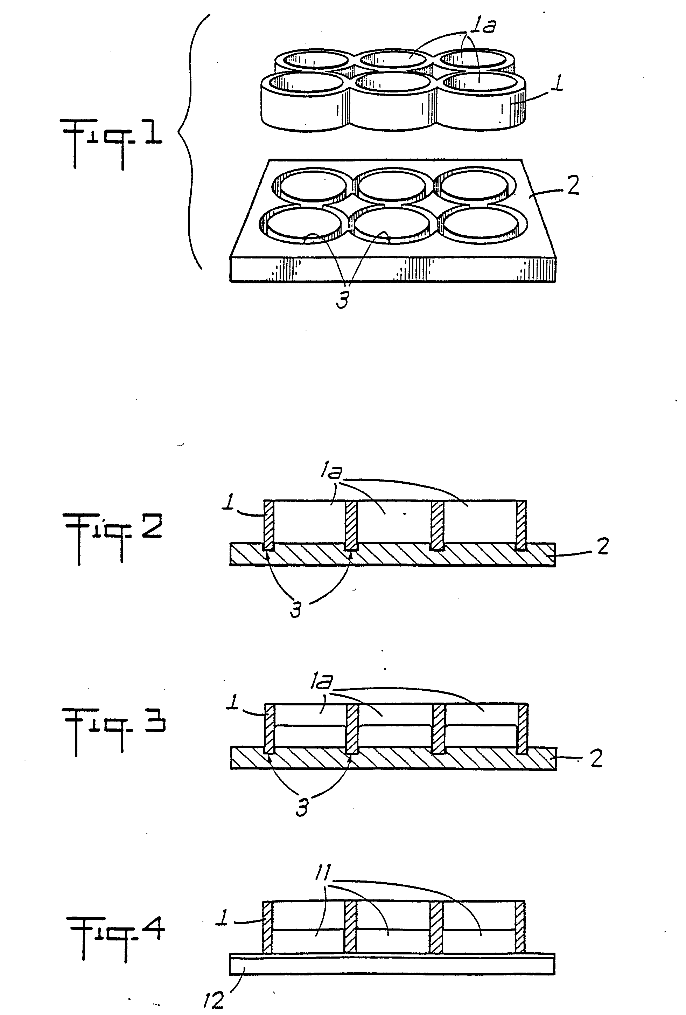

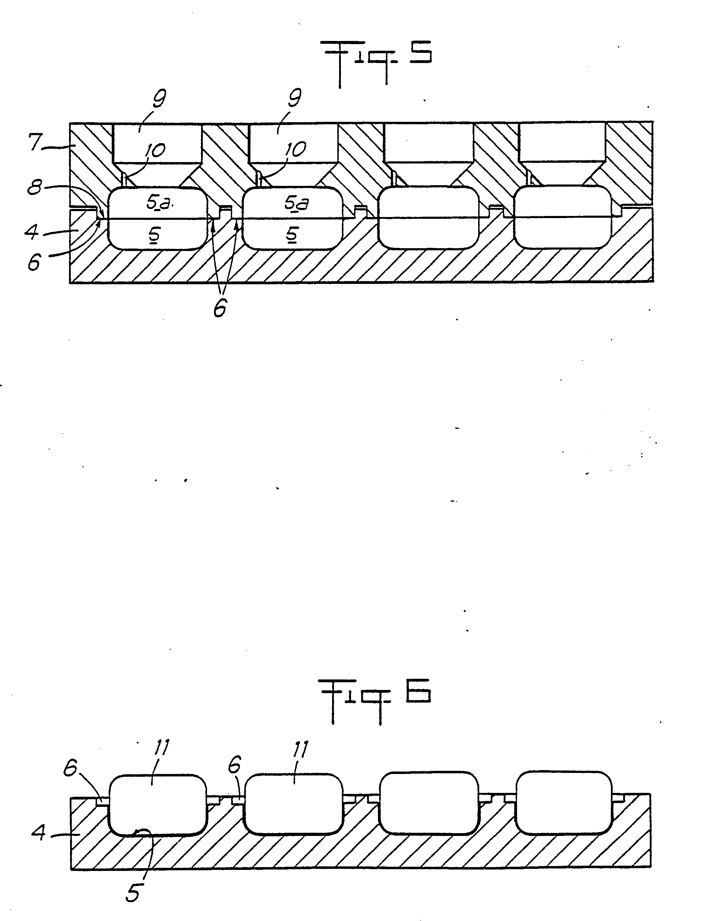

Si l'on se réfère en particulier aux figures 1 et 2 du dessin, le dispositif de moulage selon l'invention comporte :

d'une part, un ensemble 1 de moules généralement cylindriques (par exemple 6 moules solidarisés les uns aux autres le long de 2 ou 3 génératrices) et comportant des cavités de moulage référencées 1a ouvertes à leurs extrémités, et

d'autre part, un plateau 2 muni de rainures annulaires 3 (par exemple 6 rainures annulaires tangentes les uns par rapport aux autres, 2 à 2) ajustées à la configuration de la partie inférieure ou base de l'ensemble de moules ; cet ensemble de moules 1 est assemblé, de manière amovible et étanche, audit plateau 2 par emboîtement de sa partie inférieure dans les rainures 3 de ce plateau. Un tel système d'assemblage permet d'empêcher toute fuite de préfromage liquide vers l'extérieur des moules pendant l'opération de moulage, et également de séparer l'ensemble de moules du plateau par action manuelle ou mécanique pour faciliter la récupération des fromages moulés ou le nettoyage du dispositif de moulage.

A titre d'exemple non limitatif, le dispositif de moulage selon l'invention présente les dimensions suivantes pour 6 moules reliés :

Ensemble de moules

| | |
|---|---|
| diamètre intérieur des moules | 177 mm |
| épaisseur des moules | 5 mm |
| distance entre axes de 2 moules contigus | 185 à 190 mm |
| matériau pour moules : polypropylène | |

Plateau

| | |
|---|---|
| diamètre intérieur des rainures | 177 mm |
| largeur des rainures | 5 à 7 mm |
| profondeur des rainures | 6 à 8 mm |
| distance entre centres de 2 rainures contiguës | 185 à 190 mm |
| matériau pour plateau : polyéthylène haute densité à faible pouvoir d'absorption d'eau. | |

Le dispositif de moulage décrit ci-dessus peut convenir avantageusement pour la fabrication des fromages d'un poids de 100 g à 2 000 g et plus, après adaptation, au grammage visé, des dimensions citées ci-dessus données à titre d'exemple.

Bien entendu, à la place de l'ensemble de moules reliés les uns aux autres comme décrit ci-dessus, on peut également utiliser des moules individuels avec le plateau décrit ci-dessus. Par exemple, on peut utiliser 6 moules individuels, d'un diamètre intérieur de 177 mm et d'une épaisseur de 5 mm.

On peut également, à la place des moules cylindriques et des rainures annulaires d'emboîtement décrits ci-dessus et destinés à la fabrication des fromages cylindriques classiques, utiliser des moules et des rainures ayant toutes les formes envisageables pour la fabrication des fromages à section carrée, rectangulaire, triangulaire, elliptique, en losange, en cœur, etc..., sans sortir du cadre de la présente invention.

Selon un autre mode de réalisation du dispositif de moulage selon l'invention, représenté aux figures 5 et 6 du dessin, ce dispositif de moulage est constitué :

d'une part, d'une plaque multi-moule 4 comportant des demi-cavités de moulage 5 (par exemple 4 cavités) généralement cylindriques, ouvertes vers le haut, à axes alignés, et des rainures d'emboîtement annulaires 6, coaxiales aux cavités de moulage, et immédiatement adjacentes aux bords supérieurs desdites cavités de moulage, .

d'autre part, d'une plaque contre-moule 7
comportant :

des demi-cavités de moulage 5a ouvertes vers le bas, complémentaires des demi-cavités de moulage 5 de la plaque multi-moule 4, et

des nervures annulaires d'emboîtement 8 coaxiales auxdites cavités de moulage 5a et entourant les bords de celles-ci, ces nervures ayant des dimensions ajustées à celles des rainures 6 pour réaliser l'assemblage étanche de la plaque contre-moule avec la plaque multi-moule par emboîtement desdites nervures dans lesdites rainures.

Par ailleurs, les cavités de moulage 5a sont prolongées vers le haut par des entonnoirs cylindro troncroniques 9 pour l'admission du préfromage liquide dans les cavités de moulage ; des trous d'évent 10 peuvent être percés dans les portions troncroniques des entonnoirs pour l'évacuation de l'air des cavités de moulage.

Un tel système d'assemblage permet d'empêcher toute fuite de préfromage liquide vers l'extérieur des cavités de moulage pendant l'opération de moulage et également de séparer la plaque contre-moule de la plaque multi-moule par action manuelle ou mécanique pour faciliter la récupération des fromages moulés ou le nettoyage du dispositif de moulage.

L'étanchéité de l'assemblage est assurée avantageusement par le poids de la plaque contre-moule.

A titre d'exemple, le dispositif de moulage selon l'invention présente les dimensions suivantes :

| | |
|---|---|
| diamètre des cavités de moulage | 35 à 45 mm |
| hauteur des cavités de moulage (hauteur totale) | 20 à 25 mm |
| distance entre axes de deux cavités de moulage contiguës | 60 mm |

| diamètre de l'entonnoir | 40 mm |
| diamètre intérieur des nervures | 35 à 45 mm |
| diamètre extérieur des nervures | 55 mm |
| hauteur des nervures | 4,5 mm |
| diamètre extérieur des rainures | 55 mm |
| profondeur des rainures | 4,5 mm |

matériau pour multi-moule et contre-moule : polyéthylène haute densité à faible pouvoir d'absorption d'eau.

Le dispositif de moulage décrit ci-dessus permet de fabriquer avantageusement des fromages d'un poids de 10 à 100 g, après adaptation, au grammage visé, des dimensions citées ci-dessus données à titre d'exemple.

Le plateau et l'ensemble de moules ainsi que la plaque multi-moule et la plaque contre-moule peuvent être réalisés en un matériau rigide quelconque pour produits alimentaires, à pouvoir d'absorption d'eau très réduit, et de préférence en matières thermoplastiques injectables pour produits alimentaires.

Dans les exemples qui suivent, on décrit la fabrication d'un fromage de type « pâte pressée demi-ferme » à l'aide des dispositifs de moulage décrits ci-dessus.

## Exemple 1

### Préparation du préfromage liquide

On introduit dans une cuve un rétentat d'ultrafiltration obtenu par ultrafiltration d'un lait standardisé en matière grasse jusqu'à une concentration volumique d'environ 6 à 8 et plus particulièrement 6,2 à 6,8 ; ce rétentat a une teneur en extrait sec total d'environ 40 à 48 % en poids (dont environ 50 % de matières protéiques) et plus particulièrement :

41 à 43 % de matière sèche totale
20 à 22 % de matière azotée
1 à 2 % de lactose résiduel.

On ajoute à ce rétentat des levains lactiques mésophiles et de la présure et on mélange pour obtenir un préfromage liquide homogène.

### Préparation du dispositif de moulage

Parallèlement, on assemble l'ensemble de moules 1 avec le plateau 2 (figure 2) pour reconstituer le dispositif de moulage.

### Moulage des fromages

Le préfromage liquide est introduit en quantités dosées, par exemple de 250 g, dans les cavités de moulage référencées 1a délimitées par l'ensemble de moules 1 et le plateau 2 (figure 3). On obtient au bout de 15 à 30 minutes de repos un coagulum ferme 11. 75 à 90 minutes après, on procède à l'opération dite de retournement pendant laquelle le coagulum est séparé de son plateau 2 et placé sur un plateau classique 12 tout en demeurant à l'intérieur de l'ensemble de moules 1 ; le plateau 2 est désassemblé de cet ensemble de moules 1 et envoyé au lavage (figure 4) ; le coagulum demeure dans son moule jusqu'à l'opération de démoulage final qui interviendra 18 à 20 heures après.

L'ensemble de moules 1 séparé du coagulum est envoyé au lavage. Le plateau et l'ensemble de moules lavés retournent vers l'unité de fabrication où ils sont assemblés de nouveau pour participer à une nouvelle fabrication.

Le coagulum obtenu est alors soumis à des opérations de maturation classiques qui le transforment en fromage de type « pâte pressée demi-ferme ».

Les fromages obtenus, selon l'invention, correspondent tant au point de vue composition (teneur en extrait sec total : 51 à 53 % ; rapport matières grasses totales/extrait sec total : 44 à 46 %) qu'au point de vue présentation extérieure (absence de déchirures et de cassures) aux qualités qui définissent les fromages classiques de type « pâte pressée demi-ferme ».

## Exemple 2

### Préparation du préfromage liquide

La préparation du préfromage liquide dans cet exemple est effectuée comme décrit à l'exemple 1.

### Préparation du dispositif de moulage

On assemble la plaque multi-moule 4 avec la plaque contre-moule 7 par emboîtement des nervures 8 dans les rainures 6 (figure 5) pour reconstituer le dispositif de moulage.

Moulage des fromages

Le préfromage liquide est introduit en quantités dosées, par exemple de 20 g par les entonnoirs 9 dans les cavités de moulage 5-5a.

Il se forme un coagulum ferme au bout de 15 à 30 minutes de repos. 75 minutes à 90 minutes après, la plaque contre-moule 7 est soulevée manuellement ou à l'aide d'un dispositif mécanique et séparée de la plaque multi-moule 4 (figure 6) ;

on procède alors à une opération de retournement ou d'extraction à l'aide d'un dispositif mécanique, pour sortir le coagulum de la plaque multi-moule et le placer sur un plateau classique où il demeurera au repos pendant 18 à 20 heures.

Le coagulum obtenu est ensuite soumis à des opérations usuelles de maturation qui le transforment en fromage de type « pâte pressée demi-ferme ».

La plaque multi-moule et la plaque contre-moule sont envoyées dans une unité de lavage où elles sont nettoyées par des produits classiques employés en fromagerie d'où elles retournent vers l'unité de fabrication où elles sont assemblées de nouveau pour participer à une nouvelle fabrication.

Les fromages ainsi obtenus correspondent tant au point de vue composition (teneur en extrait sec total : 51 à 53 % ; rapport matières grasses totales/extrait sec total : 44 à 46 %) qu'au point de vue présentation extérieure (absence de déchirures et de cassures) aux qualités qui définissent les fromages de type « pâte pressée demi-ferme » obtenus par des procédés classiques.

**Revendications**

1. Dispositif de moulage pour la fabrication des fromages de type pâte pressée demi-ferme à partir d'un préfromage liquide, comprenant deux pièces assemblables de manière étanche et amovible l'une à l'autre, l'une au moins des pièces comportant des cavités de moulage, caractérisé en ce que ledit dispositif de moulage est réalisé en deux pièces superposables, assemblables l'une à l'autre suivant un plan de joint horizontal, la pièce supérieure comportant des cavités de moulage et la pièce inférieure formant le fond de ces cavités de moulage ou comportant des cavités de moulage complémentaires des précédentes, et en ce que ces deux pièces sont munies d'un système d'assemblage à nervures et à rainures d'emboîtement, et que ces rainures ont une configuration ajustée à celle de ces nervures pour réaliser l'étanchéité lorsque lesdites pièces sont superposées l'une à l'autre.

2. Dispositif de moulage selon la revendication 1, caractérisé en ce que la pièce supérieure est constituée par un ensemble de moules (1) solidarisés les uns aux autres, comportant chacun une cavité de moulage (1a) ouverte à ses deux extrémités, et la pièce inférieure est un plateau (2) muni de rainures (3) de configuration ajustée à celle de la base de l'ensemble de moules pour permettre l'emboîtement étanche et amovible de la base de cet ensemble dans lesdites rainures.

3. Dispositif de moulage selon la revendication 1 ou 2, caractérisé en ce que la pièce supérieure est constituée par des moules (1) solidaires, cylindriques à section circulaire et la pièce inférieure (2) est munie de rainures annulaires (3).

4. Dispositif de moulage selon la revendication 1, caractérisé en ce que :

la pièce inférieure est constituée par une plaque multi-moule (4) comportant des demi-cavités de moulage (5) ouvertes vers le haut et des rainures d'emboîtement (6) entourant les bords supérieurs desdites demi-cavités de moulage,

et que la pièce supérieure est constituée par une plaque contre-moule (7) comportant des demi-cavités de moulage (5a) ouvertes vers le haut et vers le bas, complémentaires des demi-cavités de moulage de la plaque multi-moule, et des nervures d'emboîtement (8) entourant les bords inférieurs desdites demi-cavités de moulage, la configuration des rainures étant ajustée à celle des nervures pour permettre l'emboîtement de façon étanche et amovible de celles-ci dans celles-là, et en ce que les sommets des demi-cavités de moulage de la plaque contre-moule sont prolongés vers le haut chacun par un alésage (9) formant un entonnoir pour l'admission du fromage liquide dans les cavités de moulage.

5. Dispositif de moulage selon la revendication 4, caractérisé en ce que les demi-cavités de moulage (5, 5a) sont généralement cylindriques, à axes alignés, tandis que les nervures (8) et les rainures (6) d'emboîtement sont annulaires.

6. Dispositif de moulage selon la revendication 4 ou 5, caractérisé en ce que l'entonnoir a une forme cylindro-tronconique et que la partie tronconique de l'entonnoir est percée de trous d'évent (10).

7. Dispositif de moulage selon la revendication 4 ou 5, caractérisé en ce que l'étanchéité du système d'assemblage par emboîtement est assurée par le poids de la plaque contre-moule.

8. Dispositif de moulage selon l'une quelconque des revendications 2 à 5, caractérisé en ce qu'il comporte un plateau pour le retournement du dispositif de moulage et pour la réception du coagulum moulé.

**Claims**

1. Moulding device for the manufacture of cheeses of the semi-hard pressed type from a liquid precheese, comprising two parts adapted to be removably assembled together in water-tight manner, at least one of these parts comprising moulding cavities, characterized in that said moulding device is made in two superposable parts, adapted to be assembled together according to a horizontal joint plane, the upper part comprising moulding cavities and the lower part constituting the bottom of said moulding cavities or comprising moulding cavities complementary to the preceding cavities, and in that two parts are provided with an assembly system with interlocking ribs and grooves, and in that said grooves have a configuration which matches that of the ribs in such a way that the tightness is ensured when said parts are superposed one on the other.

2. Moulding device according to claim 1, characterized in that the upper part is constituted by an assembly of moulds (1) connected together, each mould providing a moulding cavity (1a) open at both ends, and the lower part is constituted by a plate (2) provided with grooves (3) whose configuration matches that of the base of the mould assembly in such a way as to tightly fit into said grooves and to form a removable and watertight interlocking joint therebetween.

3. Moulding device according to claim 1 or 2, characterized in that the upper part is constituted by moulds (1) integral one with the other, cylindrical and of circular cross-section and the lower part (2) is provided with annular grooves (3).

4. Moulding device according to claim 1, characterized in that :
   the lower part is constituted by a multi-mould plate (4) comprising upwardly open half-cavities for moulding and grooves for interlocking (6) surrounding the upper edges of said half-cavities,
   and in that the upper part is constituted by a counter-mould plate (7) comprising upwardly and downwardly open half-cavities for moulding (5a), complementary of the half cavities for moulding of the multi-mould plate, and ribs (8) for interlocking surrounding the lower edges of said half-cavities, the configuration of the grooves matching that of the ribs so that said ribs fit tightly into said grooves to form said removable and watertight interlocking joint, and in that the upper edges of the moulding half-cavities of the counter-mould plate are each extended upwardly by a funnel-shaped bore (9) for the admission of the liquid precheese into the moulding cavities.

5. Moulding device according to claim 4, characterized in that the moulding half-cavities (5,5a) are generally cylindrical, with aligned axes, whilst the interlocking ribs (8) and grooves (6) are annular.

6. Moulding device according to claim 4 or 5, characterized in that the funnel has a cylindrical-truncated shape, and the truncated part of said funnel is pierced with vents (10).

7. Moulding device according to claim 4 or 5, characterized in that the tightness of the assembly system is ensured by the weight of the counter-mould plate.

8. Moulding device according to any one of claims 2 to 5, characterized in that it comprises a tray for the upturning of the moulding device and for receiving the moulded coagulum.


**Patentansprüche**

1. Formeinrichtung zur Herstellung von Käsen des Typs Preß-Weichkäse halbhart aus einem flüssigen Vorkäse, umfassend zwei in dichtender und lösbarer Weise aneinanderfügbare Stücke, wobei zumindest eines der Stücke Formhohlräume aufweist, dadurch gekennzeichnet, daß die Formeinrichtung in zwei übereinanderbringbaren, entlang einer horizontalen Formteilfläche aneinanderfügbaren Stücken ausgebildet ist, wobei das obere Stück Formhohlräume aufweist und das untere Stück den Boden dieser Formhohlräume bildet oder zu den vorherigen komplementäre Formhohlräume aufweist, und daß diese beiden Stücke mit einem Einsteckverbindungssystem mittels Rippen und Rillen versehen sind, und daß diese Rillen eine an jene der Rippen angepaßte Gestalt haben, um bei übereinandergebrachten Stücken die Dichtheit herzustellen.

2. Formeinrichtung nach Anspruch 1, dadurch gekennzeichnet, daß das obere Stück durch eine Gruppe von miteinander verbundenen Formen (1) gebildet ist, welche jeweils einen an beiden Enden offenen Formhohlraum (1a) aufweisen, und das untere Stück eine Platte (2) ist, die mit Rillen (3) einer Gestalt versehen ist, die an jene der Basis der Formgruppe angepaßt ist, um das dichte und abnehmbare Einstecken der Basis dieser Gruppe in die Rillen zu ermöglichen.

3. Formeinrichtung nach Anspruch 1 oder 2, dadurch gekennzeichnet, daß das obere Stück durch kreiszylinderförmige, miteinander verbundene Formen (1) gebildet ist und das untere Stück (2) mit ringförmigen Rillen (3) versehen ist.

4. Formeinrichtung nach Anspruch 1, dadurch gekennzeichnet, daß :
   das untere Stück durch eine Mehrformplatte (4) gebildet ist, die nach oben hin offene Formhalbhohlräume (5) und die oberen Ränder der Formhalbhohlräume umgebende Einsteckrillen (6) umfaßt,
   und daß das obere Stück durch eine Gegenformplatte (7) gebildet ist, die nach oben und nach unten hin offene, zu den Formhalbhohlräumen der Vielformplatte komplementäre Formhalbhohlräume (5a) und die unteren Ränder der Formhalbhohlräume umgebende Einsteckrippen (8) umfaßt, wobei die Gestalt der Rillen an jene der Rippen angepaßt ist, um das Einstecken der einen in die anderen auf dichtende und abnehmbare Weise zu ermöglichen, und daß die oberen Enden der Formhalbhohlräume der Mehrformplatte nach oben zu jeweils durch eine Ausnehmung (9) verlängert sind, welche einen Trichter zum Einfüllen des flüssigen Käses in die Formhohlräume bildet.

5. Formeinrichtung nach Anspruch 4, dadurch gekennzeichnet, daß die Formhalbhohlräume (5, 5a) im allgemeinen zylinderförmig mit gleichgerichteten Achsen sind, während die Rippen (8) und die Rillen (6) zum Ineinanderstecken ringförmig sind.

6. Formeinrichtung nach Anspruch 4 oder 5, dadurch gekennzeichnet, daß der Trichter zylinderkegelstumpfförmige Form hat und der kegelstumpfförmige Teil des Trichters mit Entlüftungslöchern (10) durchbohrt ist.

7. Formeinrichtung nach Anspruch 4 oder 5, dadurch gekennzeichnet, daß die Dichtheit des Einsteckverbindungssystems durch das Gewicht der Gegenformplatte gesichert ist.

8. Formeinrichtung nach einem der Ansprüche 2 bis 5, dadurch gekennzeichnet, daß sie eine Platte zum Umdrehen der Formeinrichtung und zur Aufnahme des Formkoagulats umfaßt.

**Fig. 1**

**Fig. 2**

**Fig. 3**

**Fig. 4**

Fig. 5

Fig. 6